# EUROPEAN PATENT APPLICATION

(11) **EP 2 518 616 A1**
(43) Date of publication of application: **31.10.2012**
(21) Application number: 10853513.9
(22) Date of filing: 25.10.2010
(51) Int. Cl.: G06F 9/44

(54) **METHOD AND DEVICE FOR LOCALIZING JAVA EDIT BOXES**

(30) Priority: 23.06.2010 CN 201010207008
(71) Applicant: ZTE Corporation, Shenzhen, Guangdong 518057 (CN)
(72) Inventor: TANG, Huanliang, Shenzhen Guangdong 518057 (CN)
(74) Representative: Howson, Richard G.B.
(86) International application number: PCT/CN2010/078074
(87) International publication number: WO 2011/160374

(57) **Abstract**

A method and device for localizing Java edit boxes are provided. The method includes: when a user selects a Java edit box from a Java Platform 2 Micro Edition (J2ME) client interface, a Java virtual machine creates a local edit box for the Java edit box and presents the local edit box to the user; and the Java virtual machine replaces any new Java edit box which is selected by the user with the local edit box and presents the local edit box to the user. The number of the local input box controlled by the virtual machine is only one, therefore the technical solution solves the problem of localizing the Java edit box individually, localization can be realized more simply with the method of the disclosure compared to the method using multiple local edit boxes controls to implement the localization, and the user experience and feelings are also improved.

## Description

### TECHNICAL FIELD

The disclosure relates to the technical field of application of a Java virtual machine in a mobile communication terminal, in particular to a method and device for localizing Java edit boxes.

### BACKGROUND

Along with the popularization of mobile phones and the continuous perfection of mobile networks, the application number of mobile phones is increased as bamboo shoots after a spring rain. The value added service, represented by the Java Platform 2 Micro Edition (J2ME) application, gradually becomes the mainstream service of middle and high-end mobile phones; consequently, the Java virtual machine based on an embedded platform also gradually becomes the mandatory requirement of many mainstream operators on mobile phones, in particular, the customized mobile phones.

The main function of the Java virtual machine is to provide a J2ME application environment for mobile phones as well as provide a series of User Interface (UI) components, wherein textfield and textbox components are edit box controls of UI components, which support the interaction between users and the J2ME application.

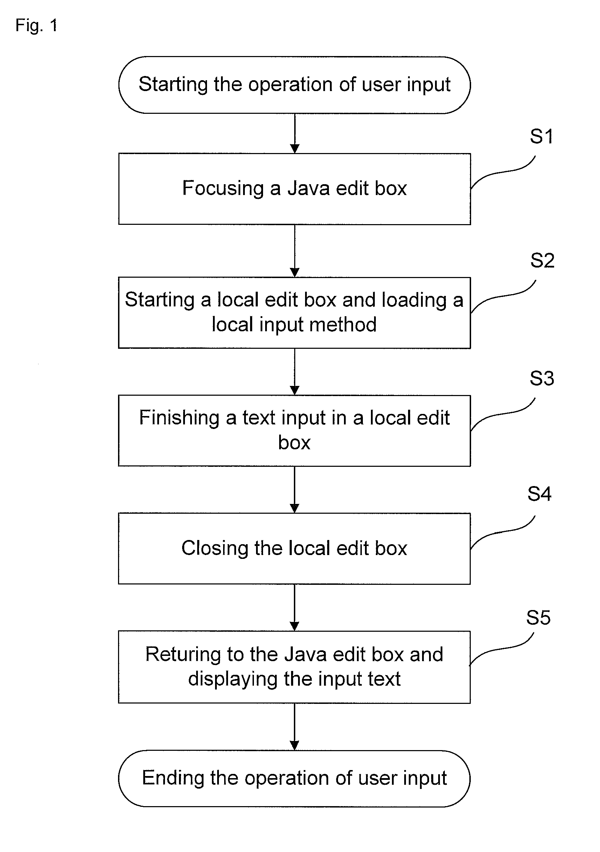

The Java edit box controls provided by the Java virtual machine are drawn on the interface in a box form, but the functions of the Java edit box controls on interacting with the users are weak, and the users even cannot perform the input operation in the box directly. In order to enable the user to perform the input operation, the Java virtual machine needs to perform the following steps as shown in the Fig. 1 to finish one text input in the current code framework:

step S1, focusing a Java edit box;

step S2, initiating a local edit box and loading a local input method;

step S3, finishing a text input in the local edit box;

step S4, closing the local edit box; and

step S5, displaying the input text in the Java edit box.

According to the above steps, when the user finishes one input in the J2ME application, it needs to call the edit boxes, including the Java edit box and the local edit box twice; and the display effect generated in the calling process is visible for the user. This puzzles the user during the use.

A mobile phone equipment platform includes a local edit box, and the local edit box is a portion of the UI components of the mobile phone equipment platform, what the local edit box supports is consistent with what the mobile phone equipment supports in term of user vision and use experiences, and the local edit box also supports all the input methods supported by the mobile phone equipment. Therefore, almost all the mainstream virtual machines use the local edit box of the mobile phone equipment platform to finish the interaction function between the user and the application. However, if the virtual machine is like the virtual machine which only can access into the local edit box by calling the edit box twice, the user experience is greatly discounted. Consequently, it is necessary to improve the user experience and feelings through the localization of the Java edit box.

The kernel of the virtual machine provides a whole set of localization methods of the UI components of the Java virtual machine for virtual machine transplant persons and brings a convenience for the transplant persons to localize all the UI components of the Java virtual machine; that is to say, the UI components of the mobile phone equipment platform is used to replace the original UI components of the Java virtual machine, including the localization of the Java edit box. After the implementation, the interface style of the whole Java virtual machine is the same as the local interface style of the mobile phone equipment platform, so that the phenomenon of calling the edit box twice is avoided and the user can input contents in the Java edit box of the Java virtual machine directly. In this case, the input steps include:

step A: focusing the Java edit box that has been replaced by the local edit box;

step B: loading an input method, and performing the text inputting by a user; and

step C: displaying the input contents in the Java edit box directly.

However, as the UI components cover a wide range, it is necessary to consider the support of a platform. In order to realize the whole localization of all UI controls, it is necessary to provide a platform transplant for each UI component and change the code framework, and a great change for the codes is also necessary. For solving such a difficulty, some virtual machines localize single or partial Java control(s). The Java controls suitable for the individual localization generally have the characteristics of poor performance of coupling with the core code, single number of the controls and simple interaction with the user. However, the performance of coupling between the Java edit box control and the core code is very excellent, and the number of the input box controls like the textField is unfixed, so it is every complicated to realize the individual localization of the Java edit box control. Meanwhile, the Java input box controls are the bridges for the interaction between the user and the J2ME application contents, therefore the conditions for the individual localization is not easy to be satisfied.

### SUMMARY

In order to solve the technical problem above, the disclosure provides a method and device for localizing Java edit boxes, to make the individual localization of the Java edit box easier.

The disclosure provides a method for localizing Java edit boxes, the method includes:

a Java virtual machine creates a local edit box for a Java edit box that is selected by a user from a J2ME client interface, and presents the local edit box to the user; and

the Java virtual machine replaces any new Java edit box selected by the user with the local edit box, and presents the local edit box to the user.

In the solution, when the user selects the Java edit box from the J2ME client interface, the method may further include:

the Java virtual machine allocates a focal length to the Java edit box.

In the solution, the Java virtual machine creating a local edit box for the Java edit box and presenting the local edit box to the user may include:

the Java virtual machine redraws in turn Java edit boxes on the J2ME client interface; and

when determining that a Java edit box to be drawn has a focal length, the Java virtual machine creates a local edit box with a corresponding size and position for the Java edit box and presents the local edit box to the user.

In the solution, the Java virtual machine replacing any new Java edit box selected by the user with the local edit box and presenting the local edit box to the user may include:

the Java virtual machine adjusts a position, a size and an attribute of the local edit box according to the new Java edit box, replaces the new Java edit box with the adjusted local edit box, and presents the adjusted local edit box to the user.

In the solution, the method may further include:

storing contents input by the user in a Java edit box that just lost a focal length when the user selects any new Java edit box.

The disclosure also provides another method for localizing Java edit boxes, including:

when a user selects each type of Java edit box from a J2ME client interface for a first time, a Java virtual machine respectively creates a local edit box for each type of Java edit box while refreshing an interface, and presents the local edit box to the user; and

the Java virtual machine replaces a new Java edit box selected by the user with the local edit box of a same type, and presents the local edit box to the user.

The disclosure also provides a device for localizing Java edit boxes, the device includes a Java virtual machine, wherein

the Java virtual machine is configured to:

accept a user's selection of a Java edit box;

when the user selects a Java edit box for the first time, refresh an interface, create a local edit box for the Java edit box and present the local edit box to the user; and

replace any new Java edit box selected by the user with the local edit box, and present the local edit box to the user.

In the solution, the Java virtual machine may include:

a virtual machine core module configured to:

when the user selects a Java edit box for the first time, create a local edit box for the Java edit box and send the local edit box to a transplant module; and

notify the transplant module when the user subsequently selects any new Java edit box;

the transplant module configured to:

receive the local edit box sent by the virtual machine core module;

adjust a position, a size and an attribute of the local edit box according to the new Java edit box selected by the user after being notified by the virtual machine core module; and

present the adjusted local edit box to the user through a J2ME client interface; and

a K native interface module configured to connect the virtual machine core module with the transplant module.

In the solution, the virtual machine core module may be further configured to allocate a focal length to the Java edit box when the user selects the Java edit box.

In the solution, the virtual machine core module may be further configured to store contents input by the user in the Java edit box that just lost the focal length when the user selects any new Java edit box.

By adopting the technical solution, the disclosure at least has the following advantages:

in the method and the device for localizing Java edit boxes disclosed by the disclosure, when the user selects a Java edit box from the J2ME client interface, the Java virtual machine creates a local edit box for the Java edit box while refreshing the interface and presents the local edit box to the user; and the Java virtual machine subsequently replaces any new Java edit box which is selected by the user with the created local edit box and presents the local edit box to the user; the disclosure utilizes the characteristic that the interface of the local edit box is consistent with that of the Java edit box, no matter how many Java edit boxes are on the current application interface, the Java virtual machine only needs to replace the Java edit box which is used by the user currently with one local edit box; other Java edit boxes which are not used by the user will not be localized; but in terms of the vision and usage of the user, the Java edit boxes of the whole virtual machine seem to have been localized, thereby, the purpose of localizing the Java edit boxes is realized; compared with the prior art, the disclosure uses one local edit box to realize the localization of Java edit boxes in unfixed number; the number of the local input box controlled by the virtual machine is only one, therefore the method of the disclosure solves the problem of localizing the Java edit box individually, localization can be realized more simply with the method of the disclosure compared to the method using multiple local edit box controls to implement the localization, and the user experience and feelings are also improved.

### BRIEF DESCRIPTION OF THE DRAWINGS

Fig. 1 is a flowchart of a method for localizing Java edit boxes in the prior art;

Fig. 2 is a flowchart of a method for localizing Java edit boxes according to the first embodiment of the disclosure;

Fig. 3 is a flowchart of a method for localizing Java edit boxes according to the second embodiment of the disclosure; and

Fig. 4 is a schematic diagram of a device for localizing Java edit boxes according to the third embodiment of the disclosure.

### DETAILED DESCRIPTION

In order to further illustrate the technical means which are adopted to achieve the expected purpose and the advantageous effects of the disclosure, the method and the device for localizing the Java edit boxes provided by the disclosure are described below with reference to the accompanying drawings and preferred embodiments in detail.

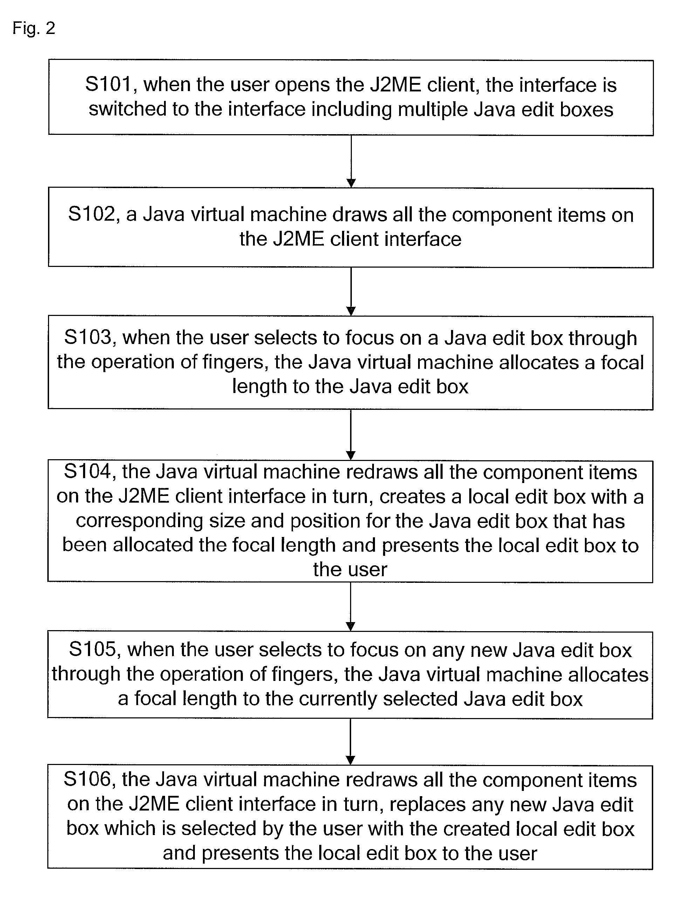

In the first embodiment of the disclosure, a method for localizing Java edit boxes is provided, as shown in the Fig. 2, the method includes the following steps.

Step S101: when the user opens the J2ME client, the interface is switched to the interface including multiple Java edit boxes;

wherein all the UI components on the J2ME client interface belong to the component items, so each Java edit box corresponds one component item.

Step S102: a Java virtual machine draws all the component items on the J2ME client interface.

Step S103: when the user selects to focus on a Java edit box through the operation of fingers, the Java virtual machine allocates a focal length to the Java edit box;

specifically, when the user selects to focus on a Java edit box through the operation of fingers, the Java virtual machine sets the focused (hasFocus) identification of the component interface implementation (ItemLFmpl) example corresponding to the Java edit box as true;

in the step, when the user selects to focus on a Java edit box through the operation of fingers, the Java virtual machine sets the focused identification of the component interface implementation example corresponding to the unselected Java edit box as false.

Step S104: the Java virtual machine redraws all the component items on the J2ME client interface in turn, creates a local edit box with a corresponding size and position for the Java edit box that has been allocated the focal length and presents the local edit box to the user;

specifically, the Java virtual machine redraws all the component items on the J2ME client interface in turn, and determines if the Java edit box to be drawn has a focal length; that is, determines if the focused identification of the component interface implementation example corresponding to the Java edit box to be drawn is true, if so, the Java virtual machine calls the bottom layer function of the operating system to create a local edit box with a corresponding size and position for the Java edit box to be drawn and presents the local edit box to the user; if not, the Java virtual machine draws a component item corresponding to the Java virtual machine's own Java edit box and presents the component item to the user, and so on until all the Java edit boxes on the J2ME client interface are drawn.

Step S105: when the user selects to focus on any new Java edit box through the operation of fingers, the Java virtual machine allocates a focal length to the currently selected Java edit box;

specifically, when the user selects to focus on any new Java edit box through the operation of fingers, the Java virtual machine sets the focused identification of the component interface implementation example corresponding to the currently selected Java edit box as true and sets the focused identification of the component interface implementation example corresponding to the originally focused Java edit box as false.

Step S106: the Java virtual machine redraws all the component items on the J2ME client interface in turn, replaces any new Java edit box which is selected by the user with the created local edit box and presents the local edit box to the user;

specifically, the Java virtual machine redraws all the component items on the J2ME client interface in turn; when it is determined that the focused identification of the component interface implementation example corresponding to the Java edit box to be drawn is true, the Java virtual machine adjusts the position, the size and the attribute of the local edit box according to the new Java edit box selected by the user, replaces the new Java edit box selected by the user with the adjusted local edit box and presents the local edit box to the user; when it is determined that the focused identification of the component interface implementation example corresponding to the Java edit box to be drawn is false, the Java virtual machine determines if the focal length was lost just based on the uCallTraverseOut function of the component interface implementation example corresponding to the Java edit box to be drawn; if so, the Java virtual machine stores the contents input by the user in the Java edit box which just lost the focal length, draws a component item corresponding to the Java edit box and presents the component item to the user; otherwise, the Java virtual machine draws a component item corresponding to the Java virtual machine's own Java edit box and presents the component item to the user.

In the embodiment, each time the user selects to focus on any new Java edit box, steps S105 and S106 are performed.

The embodiment improves the presenting method of the Java input box controls of the virtual machine contents. The prior art provides a local interface for all the UI controls of the Java virtual machine, but does not localize the Java input box control individually. The disclosure makes use of the characteristic that the interface of the local edit box is consistent with that of the Java edit box, no matter how many Java edit boxes are on the current application interface, the Java virtual machine only needs to replace the Java edit box which is used by the user currently with one local edit box, and other Java edit boxes which are not used by the user will not be localized, but in terms of the vision and usage of the user, the Java edit boxes of the whole virtual machine seem to have been localized, thereby, the purpose of localizing the Java edit boxes is realized. If the Java edit boxes are different in types, it only needs to adjust the attribute of the local edit box in the process of replacing the Java edit box. Compared with the prior art, the disclosure uses one local edit box to realize the localization of Java edit boxes in uncertain number. The number of the local input box controlled by the virtual machine is only one, therefore the method of the disclosure solves the problem of localizing the Java edit box individually, localization can be realized more simply with the method of the disclosure compared to the method using multiple local edit box controls to implement the localization, and the user experience and feelings are also improved.

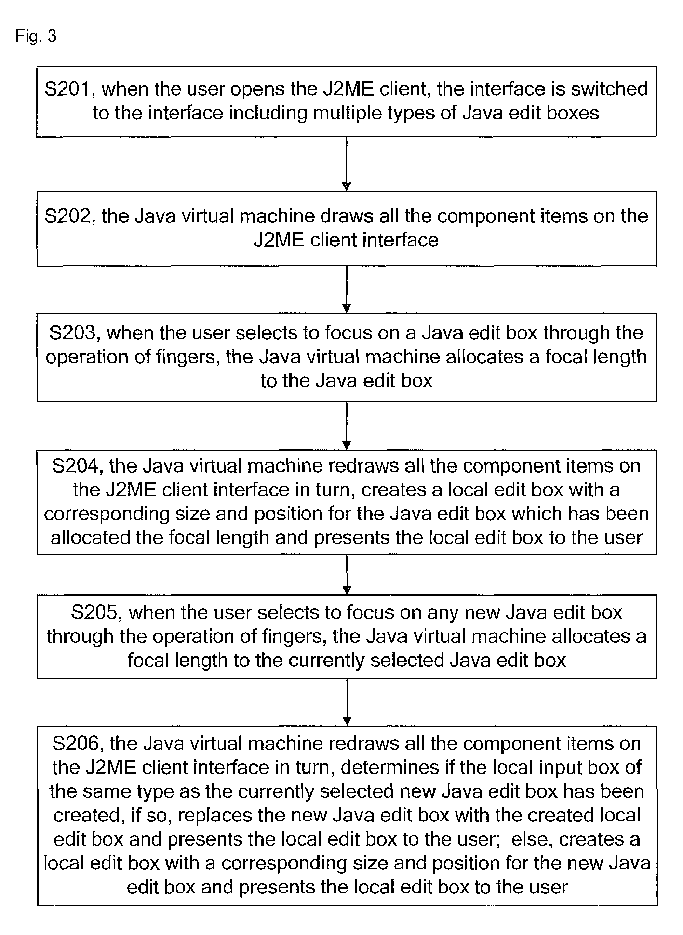

In the second embodiment of the disclosure, a method for localizing Java edit boxes is provided, as shown in the Fig. 3, the method includes the following steps.

Step S201: when the user opens the J2ME client, the interface is switched to the interface including multiple types of Java edit boxes, such as a password input box, a digit input box, a Uniform Resource Locator (URL) address input box and an email address input box, wherein all the UI components on the J2ME client interface belong to the component items, so each Java edit box corresponds to one component item.

Step S202: the Java virtual machine draws all the component items on the J2ME client interface.

Step S203: when the user selects to focus on a Java edit box through the operation of fingers, the Java virtual machine allocates a focal length to the Java edit box;

specifically, when the user selects to focus on a Java edit box through the operation of fingers, the Java virtual machine sets the focused identification of the component interface implementation example corresponding to the Java edit box as true;

in the step, when the user selects to focus on a Java edit box through the operation of the fingers, the Java virtual machine sets the focused identification of the component interface implementation example corresponding to unselected Java edit box as false.

Step S204: the Java virtual machine redraws all the component items on the J2ME client interface in turn, creates a local edit box with a corresponding size and position for the Java edit box which has been allocated the focal length and presents the local edit box to the user;

specifically, the Java virtual machine redraws all the component items on the J2ME client interface in turn, and determines if the focused identification of the component interface implementation example corresponding to the Java edit box to be drawn is true; if so, the Java virtual machine calls the bottom layer function of the operating system to create a local edit box with a corresponding size and position for the Java edit box to be drawn and presents the local edit box to the user; if not, the Java virtual machine draws a component item corresponding to the Java virtual machine's own Java edit box and presents the component item to the user, and so on until all the Java edit boxes on the J2ME client interface are drawn.

Step S205: when the user selects to focus on any new Java edit box through the operation of fingers, the Java virtual machine allocates a focal length to the currently selected Java edit box;

specifically, when the user selects to focus on any new Java edit box through the operation of fingers, the Java virtual machine sets the focused identification of the component interface implementation example corresponding to the currently selected Java edit box as true.

Step S206: the Java virtual machine redraws all the component items on the J2ME client interface in turn, determines if the local input box of the same type as the currently selected new Java edit box has been created, if so, the Java virtual machine replaces the new Java edit box with the created local edit box and presents the local edit box to the user, and if not, the Java virtual machine creates a local edit box with a corresponding size and position for the new Java edit box and presents the local edit box to the user;

specifically, the Java virtual machine redraws all the component items on the J2ME client interface in turn, and determines if the focused identification of the component interface implementation example corresponding to the Java edit box to be drawn is true;

if the focused identification is true, the Java virtual machine determines whether the Java edit box to be drawn and the Java edit box with the created local input box belong to the same type, if so, the Java virtual machine adjusts the position and the size of the created local edit box according to the Java edit box to be drawn, replaces the Java edit box with the adjusted local edit box and presents the local edit box to the user, otherwise, the Java virtual machine calls the bottom layer function of the operating system to create a local edit box with a corresponding size and position for the Java edit box to be drawn and presents the local edit box to the user;

if the focused identification is not true, the Java virtual machine determines whether the focal length was lost just according to the uCallTraverseOut function of the component interface implementation example corresponding to the Java edit box to be drawn, if so, the Java virtual machine stores the contents input by the user in the Java edit box which just lost the focal length, draws a component item corresponding to the Java edit box and presents the component item to the user; otherwise, the Java virtual machine draws a component item corresponding to the Java edit box and presents the component item to the user.

It should be noted that: once the Java edit box of the same type is selected to be focused on for the first time, the local edit box of the corresponding type will be created, and subsequently when the user selects a Java edit box of the same type again, the Java edit box is replaced directly by the created local edit box; however, the replacement cannot be performed between edit boxes of different types.

In the embodiment, each time the user selects to focus on any new Java edit box, steps S205 and S206 are performed.

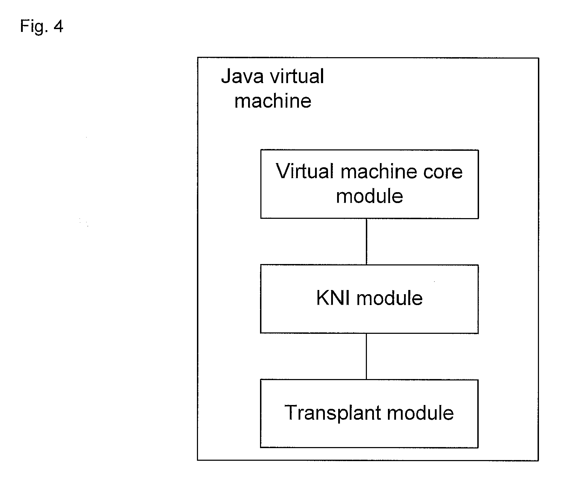

In the third embodiment of the disclosure, a device for localizing Java edit boxes is provided, as shown in the Fig. 4, the device includes a Java virtual machine, wherein

the Java virtual machine is configured to accept a user's selection of the Java edit box, create, when the user selects a Java edit box for the first time, a local edit box for the Java edit box and present the local edit box to the user, and subsequently replace any new Java edit box selected by the user with the created local edit box, and present the local edit box to the user. The Java virtual machine includes three modules as follows:

a virtual machine core module, which is configured to, when the user selects a Java edit box for the first time, create a local edit box for the Java edit box and send the local edit box to a transplant module, and notify the transplant module when the user subsequently selects any new Java edit box;

the virtual machine core module is specifically configured to, when the user selects a Java edit box for the first time, allocate a focal length to the Java edit box, that is, set the focused identification of the component interface implementation example corresponding to the Java edit box to be drawn as true; and the virtual machine core module is configured to redraw the Java edit boxes on the J2ME client interface in turn, and determine whether the Java edit box to be drawn has a focal length, that is, determine whether the focused identification of the component interface implementation example corresponding to the Java edit box to be drawn is true, if so, draw a local edit box with a corresponding size and position for the Java edit box to be drawn and send the local edit box to the transplant module; otherwise, draw a Java edit box of the Java virtual machine until all the Java edit boxes on the J2ME client interface are drawn; and notify the transplant module when the user subsequently selects any new Java edit box;

the transplant module, which is configured to receive the local edit box sent by the virtual machine core module, adjust the position, the size and the attribute of the local edit box according to the new Java edit box selected by the user after being notified by the virtual machine core module, and present the adjusted local edit box to the user through the J2ME client interface; and

a K Native Interface (KNI) module, which is configured to connect the virtual machine core module with the transplant module.

The virtual machine core module is further configured to store the contents input by the user in the Java edit box which lost the focal length just when the user selects any new Java edit box.

The disclosure is not limited to the three specific embodiments, for those skilled in the art, the disclosure can be used for other controls of the Java virtual machine, such as a progress bar, a choiceGroup and the like.

The method of the disclosure can realize the localization of the Java edit boxes in unfixed number through one local edit box, and solves the problem of localizing the Java edit box individually; localization can be realized more simply with the method of the disclosure compared to the method using multiple local edit box controls to implement the localization, and the user experience and feelings are also improved.

Through the illustration of the specific embodiments, the technical means adopted for achieving the expected purpose and the advantageous effects of the disclosure can be understood deeply; however, the accompanying drawings are only used for reference and illustration rather than limiting the disclosure.

## Claims

1. A method for localizing Java edit boxes, comprising:
creating, by a Java virtual machine, a local edit box for a Java edit box that is selected by a user from a J2ME client interface, and presenting the local edit box to the user; and
replacing, by the Java virtual machine, any new Java edit box selected by the user with the local edit box, and presenting the local edit box to the user.

2. The method according to claim 1, further comprising:
allocating, by the Java virtual machine, a focal length to the Java edit box when the user selects the Java edit box from the J2ME client interface.

3. The method according to claim 1, wherein the Java virtual machine creating a local edit box for the Java edit box and presenting the local edit box to the user comprises:
redrawing, by the Java virtual machine, in turn Java edit boxes on the J2ME client interface; and
when determining that a Java edit box to be drawn has a focal length, creating a local edit box with a corresponding size and position for the Java edit box and presenting the local edit box to the user.

4. The method according to claim 1, wherein the Java virtual machine replacing any new Java edit box selected by the user with the local edit box and presenting the local edit box to the user comprises:
adjusting, by the Java virtual machine, a position, a size and an attribute of the local edit box according to the new Java edit box;
replacing the new Java edit box with the adjusted local edit box; and
presenting the adjusted local edit box to the user.

5. The method according to claim 1, 2, 3 or 4, further comprising: storing contents input by the user in a Java edit box that just lost a focal length when the user selects any new Java edit box.

6. A method for localizing Java edit boxes, comprising:
when a user selects each type of Java edit box from a J2ME client interface for a first time, respectively creating, by a Java virtual machine, a local edit box for each type of Java edit box and presenting the local edit box to the user; and
replacing, by the Java virtual machine, a new Java edit box selected by the user with the local edit box of a same type, and presenting the local edit box to the user.

7. A device for localizing Java edit boxes, comprising:
a Java virtual machine configured to:
accept a user's selection of a Java edit box;
when the user selects a Java edit box for the first time, create a local edit box for the Java edit box and present the local edit box to a user; and
replace any new Java edit box selected by the user with the local edit box, and present the local edit box to the user.

8. The device according to claim 7, wherein the Java virtual machine comprises:
a virtual machine core module configured to:
when the user selects a Java edit box for the first time, create a local edit box for the Java edit box and send the local edit box to a transplant module; and
notify the transplant module when the user subsequently selects any new Java edit box;
the transplant module configured to:
receive the local edit box sent by the virtual machine core module;
adjust a position, a size and an attribute of the local edit box according to the new Java edit box selected by the user after being notified by the virtual machine core module; and
present the adjusted local edit box to the user through a J2ME client interface; and
a K native interface module configured to connect the virtual machine core module with the transplant module.

9. The device according to claim 8, wherein the virtual machine core module is further configured to allocate a focal length to the Java edit box when the user selects the Java edit box.

10. The device according to claim 9, wherein the virtual machine core module is further configured to store contents input by the user in the Java edit box that just lost the focal length when the user selects any new Java edit box.
